# FASCICULE DE BREVET EUROPEEN

(11) **EP 0 624 495 B1**
(45) Date de publication et mention de la délivrance du brevet: **30.07.1997**
(21) Numéro de dépôt: 94401078.4
(22) Date de dépôt: 13.05.1994
(51) Int. Cl.: B60R 16/02, F21Q 1/00

(54) **Module électrique pour la commande multiplexée d'un ensemble de lampes d'éclairage ou de signalisation de véhicule automobile**
Elektrische Baugruppe für die Multiplexsteuerung einer Beleuchtungs- oder Signaleinrichtung an Kraftfahrzeugen
Electric module for the multiplexed control of a lighting or signalling assembly on a motor vehicle

(30) Priorité: 14.05.1993 FR 9305845
(43) Date de publication de la demande: 17.11.1994
(73) Titulaire: VALEO VISION, 93000 Bobigny (FR)
(72) Inventeur: Boucheron, Jean-Louis, F-77176 Savigny-Le-Temple (FR); Segaud, Daniel, F-75012 Paris (FR)
(74) Mandataire: Schrimpf, Robert

(56) Documents cités:
- EP-A- 0 217 762
- EP-A- 0 326 668
- EP-A- 0 392 824
- EP-A- 0 430 792

## Description

La présente invention a trait d'une façon générale à la commande dite multiplexée de l'allumage/extinction des lampes d'éclairage ou de signalisation des véhicules automobiles.

Le principe d'une telle commande multiplexée, selon lequel un signal de commande unique véhicule des ordres d'allumage/extinction pour plusieurs fonctions lumineuses indépendantes, et un bus comportant ce signal de commande et une ligne d'alimentation de puissance unique circule entre les divers dispositifs d'éclairage et de signalisation, est connu notamment par FR-A-2 154 209, DE-A-2 809 763 et EP-A-0 217 762. Cependant, ces documents n'exposent que le principe électrique et électronique d'une telle commande.

On a récemment tenté d'améliorer l'intégration des circuits électroniques associés à ce type de commande dans les blocs de feux de signalisation. Le document FR-A-2 654 996 décrit une telle tentative.

Enfin, le document EP-A-0 392 824 divulgue un module électrique pour un bloc de feux de signalisation avec les caractéristiques du préambule de la revendication 1.

La présente invention vise à proposer d'autres solutions, pratiques et économiques à mettre en oeuvre, pour réaliser cette intégration.

Elle propose à cet effet un module électrique pour un bloc de feux de signalisation de véhicule automobile, comprenant en combinaison les caractéristiques de la revendication 1.

Des aspects avantageux, mais facultatifs, du module de la présente invention sont les suivants :
- le porte-lampes présente la forme d'une plaque comportant d'un côté des pistes conductrices constituant les moyens de liaison électrique de puissance et du côté opposé un boîtier dans lequel sont prévus des moyens de montage du circuit imprimé portant ledit circuit électronique, et ledit circuit imprimé porte des contacts s'étendant parallèlement à une direction de mise en place et d'extraction dudit circuit imprimé et aptes à traverser ledit porte-lampes pour être reliés électriquement auxdites pistes.
- ladite direction de mise en place et d'extraction du circuit imprimé est essentiellement perpendiculaire à un plan général dudit porte-lampes.
- le module comprend en outre un couvercle de fermeture dudit boîtier, dans lequel est formée une ouverture pour l'accès à un connecteur de commande et d'alimentation électrique monté sur ledit circuit imprimé.
- le porte-lampes présente la forme d'une plaque comportant d'un côté des pistes conductrices constituant les moyens de liaison électrique de puissance et du côté opposé des moyens formant butées pour le circuit imprimé, le circuit imprimé s'étend essentiellement parallèlement à un plan général dudit porte-lampes, il est prévu un moyen de connexion électrique entre lesdites pistes conductrices et ledit circuit électronique, qui s'étend essentiellement transversalement au circuit imprimé et au porte-lampes et qui traverse ce dernier pour sa connexion électrique avec lesdites pistes, et il est prévu en outre un boîtier monté sur le porte-lampes et définissant des contre-butées pour le circuit imprimé.
- il est prévu en outre un connecteur de commande et d'alimentation comportant des contacts montés dans l'épaisseur du boîtier et reliés au circuit imprimé, ledit boîtier comportant des aménagements définissant une cavité pour lesdits contacts.
- le porte-lampes possède au droit dudit connecteur de commande et d'alimentation des moyens formant appui pour le circuit imprimé.
- le circuit imprimé constitue également une plaque porte-lampes, en ce que les moyens de liaison électrique de puissance sont portés par ledit circuit imprimé, et il est prévu en outre des douilles rapportées du côté des composants dudit circuit électronique et soudées sur le circuit imprimé.
- il est prévu en outre un boîtier comportant des aménagements pour son montage sur le module par coopération avec des aménagements associés formés sur les douilles rapportées.
- lesdits aménagements sont des aménagements d'encliquetage.
- il est prévu en outre un connecteur de commande et d'alimentation comportant des contacts montés sur le circuit imprimé et traversant le boîtier, ce dernier comportant des aménagements définissant une cavité pour lesdits contacts.
- lesdits aménagements viennent en appui contre le circuit imprimé au voisinage des contacts.
- le circuit imprimé est un circuit double face, les composants du circuit électronique sont des composants à montage en surface, et les douilles et les contacts du connecteur sont soudés sur le circuit imprimé du côté opposé aux composants.
- le circuit imprimé est un circuit simple face, en ce que les composants du circuit électronique sont des composants à montage traversant et en ce que les parties à souder des composants, des douilles et des contacts du connecteur font toutes saillie d'un même côté du circuit imprimé, opposé aux composants, pour permettre une opération unique de soudure à la vague.
- chaque douille comporte un corps en matière isolante et au moins deux organes conducteurs portés par le corps, débouchant à une extrémité dans une cavité définie par ledit corps pour recevoir un culot de lampe et à l'autre extrémité au voisinage d'une surface d'appui du corps contre le circuit imprimé et dans l'alignement de ladite surface, pour permettre de réaliser la connexion électrique de la douille par refusion en même temps que les composants du circuit électronique.
- ladite surface d'appui du corps de douille comporte une gorge pour un joint d'étanchéité.
- lesdites autres extrémités des organes conducteurs font saillie vers l'extérieur par rapport à une région de base du corps définissant ladite surface d'appui.
- chaque corps de douille comporte des aménagements aptes à coopérer avec des aménagements associés prévus sur le circuit imprimé pour le maintien dudit corps de douille avant soudage par refusion.
- il est prévu en outre un boîtier collé sur la périphérie du circuit imprimé.
- il est prévu en outre un connecteur de commande et d'alimentation comportant une embase emprisonnant une pluralité de contacts du connecteur, ladite embase présentant une surface d'appui contre le circuit imprimé et lesdits contacts étant disposés en affleurement sur cette surface d'appui, pour permettre de réaliser la connexion électrique de ladite embase par refusion en même temps que les composants du circuit électronique, et ladite embase définit une cavité pour les contacts du connecteur.
- l'embase du connecteur comporte des aménagements aptes à coopérer avec des aménagements associés prévus sur le circuit imprimé pour le maintien de ladite embase avant soudage par refusion.
- ledit boîtier comporte une ouverture au droit de ladite cavité définie par l'embase.
- le boîtier est soudé à ladite embase au voisinage de ladite ouverture.
- le boîtier présente au droit de chaque douille rapportée un aménagement d'appui contre une face de ladite douille opposée au circuit imprimé.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1a est une vue en élévation de côté et en coupe partielle d'un module porte-lampes pour feux de signalisation selon une première forme de réalisation de la présente invention,
la figure 1b est une vue en élévation de l'arrière et en coupe partielle du module porte-lampes de la figure 1a,
la figure 1c est une vue en élévation de l'arrière du module porte-lampes des figures 1a et 1b,
la figure 2a est une vue en élévation de côté et en coupe partielle d'un module porte-lampes pour feux de signalisation selon une deuxième forme de réalisation de la présente invention,
la figure 2b est une vue en élévation de l'arrière du module porte-lampes de la figure 2a, les moitiés gauche et droite montrant respectivement le module porte-lampes dans deux formes d'exécution différentes,
la figure 2c est une vue de côté en coupe d'un détail du module porte-lampes des figures 2a et 2b,
la figure 3a est une vue en élévation de côté et en coupe partielle d'un module porte-lampes pour feux de signalisation selon une troisième forme de réalisation de la présente invention,
la figure 3b est une vue en élévation de l'arrière d'une partie du module porte-lampes de la figure 3a,
la figure 3c est une vue en élévation de l'arrière, à échelle réduite, d'un détail du module porte-lampes des figures 3a et 3b,
la figure 4 est une vue en élévation de côté et en coupe partielle d'un module porte-lampes pour feux de signalisation selon une quatrième forme de réalisation de la présente invention,
la figure 5a est une vue en élévation de côté et en coupe partielle d'un module porte-lampes pour feux de signalisation selon une cinquième forme de réalisation de la présente invention,
la figure 5b est une vue de l'arrière du module porte-lampes de la figure 5a, dépourvu de l'un de ses composants,
la figure 5c est une vue de détail à échelle agrandie de la figure 5a, et
la figure 5d est une vue de dessus en coupe partielle d'un autre détail du module porte-lampes des figures 5a et 5b.

On notera préliminairement que, d'une figure à l'autre, des éléments ou parties identiques ou similaires sont désignés dans la mesure du possible par les mêmes signes de référence et ne seront pas décrits à chaque fois.

On notera également que, d'une façon générale, les termes "avant", "arrière" et analogues seront utilisés par rapport à la direction générale d'émission de la lumière.

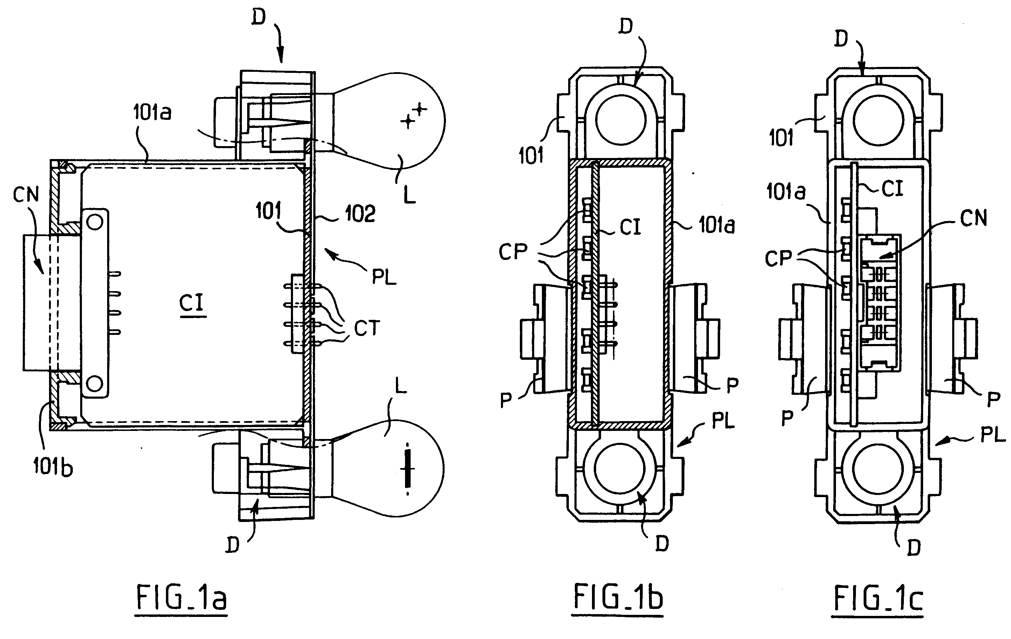

En référence tout d'abord aux figures 1a, 1b et 1c, on a représenté un module porte-lampes d'un bloc de feux de signalisation pour véhicule automobile qui comprend un porte-lampe, des lampes montées dans celui-ci, un circuit électronique de démultiplexage de signaux de commande d'allumage et d'extinction des lampes, un circuit électronique de puissance pour l'allumage/extinction des lampes à partir du circuit de démultiplexage, un circuit de distribution de puissance à pistes conductrices entre le circuit de puissance et les lampes et un connecteur pour appliquer au module porte-lampes les signaux de commande, la tension d'alimentation des lampes, typiquement +12v, et la masse.

Pour plus de détails quant à la commande multiplexée des lampes d'éclairage ou de signalisation d'un véhicule automobile, on se référera par exemple aux documents mentionnés en introduction.

Le porte-lampes est monté, de façon classique en soi, sur un socle portant un ou plusieurs miroirs de récupération de flux et par un ou plusieurs voyants de fermeture.

Le porte-lampes PL est réalisé de façon classique, c'est-à-dire qu'il comporte un support en matière plastique 101 sur lequel est rapporté le circuit de distribution de puissance 102 composé d'un circuit métallique prédécoupé établissant la liaison électrique entre des sorties de puissance pour les lampes, situées dans la région centrale du porte-lampes, et les douilles D pour des lampes L, définies par le porte-lampes.

Le support 101 du porte-lampes PL comporte, s'étendant du côté opposé aux lampes L, un boîtier par exemple parallélépipédique 101a, avantageusement venu de moulage avec le support 101.

Dans ce boîtier est disposé verticalement et parallèlement à l'axe des lampes L un circuit imprimé CI portant le circuit de démultiplexage d'un signal multiplexé de commande appliqué sur un connecteur CN par exemple rivé sur le circuit imprimé et dirigé vers l'arrière (vers la gauche sur la figure 1a), ainsi que le circuit à semiconducteurs de puissance commandés par le circuit de démultiplexage pour sélectivement appliquer ou non une tension aux bornes des lampes respectives. Les composants de ces circuits sont représentés schématiquement et désignés par CP.

Ce circuit imprimé CI est maintenu en place par exemple par des rainures de maintien prévues dans les parois supérieure et inférieure du boîtier 101a, comme le montrent en particulier les figures 1b et 1c.

D'autre part, le circuit imprimé porte, le long de son bord orienté vers le porte-lampes PL, un ensemble de contacts CT orientés dans la direction de mise en place et d'extraction du circuit imprimé et capables de traverser le support 101 du porte-lampes PL dans sa région centrale et de faire saillie du côté du circuit à pistes découpées 102 en traversant des trous prévus aux extrémités des pistes menant vers chaque douille de lampe D. Ces contacts CT sont soudées aux pistes, par exemple de façon robotisée.

Enfin le module porte-lampes des figures 1a à 1c comprend un couvercle arrière 101b pour le boîtier 101a, couvercle dans lequel est formée une ouverture pour le connecteur CN. Ce couvercle est en l'espèce clipsé sur le boîtier et assure le maintien, en direction axiale, du circuit imprimé CI.

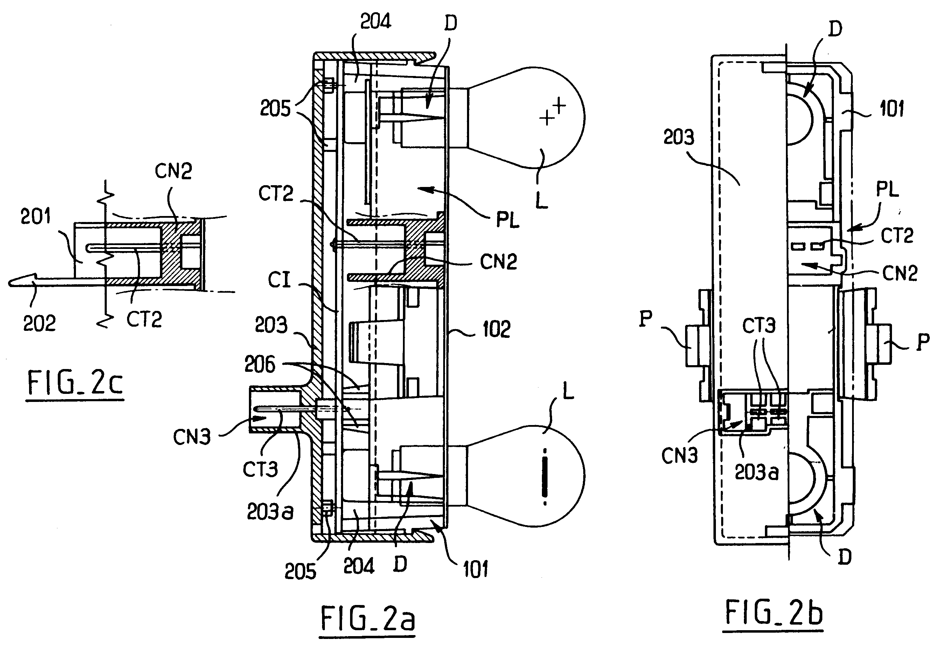

En référence maintenant aux figures 2a-2c, on a représenté un module porte-lampes qui comprend à nouveau un porte-lampes PL de type classique avec un support isolant 101 et un circuit à pistes découpées 102.

Ce mode de réalisation est expressément conçu pour que le module porte-lampes puisse être réalisé de façon conventionnelle, c'est-à-dire avec une alimentation individuelle des lampes à l'aide d'un faisceau de conducteurs arrivant sur le bloc optique, ou avec une commande multiplexée.

Pour atteindre cet objectif, le porte-lampes PL porte dans sa région centrale, de préférence d'un seul tenant, un connecteur CN2 qui, à l'origine, présente la forme conventionnelle telle qu'illustrée sur la figure 2c, avec notamment une région 201 qui fait saillie vers l'arrière au delà de l'extrémité libre des contacts mâles CT2 de ce connecteur, et qui porte une languette de verrouillage 202 (partie non hachurée).

Dans sa version non multiplexée, le module porte-lampes comporte le connecteur CN2 tel que défini ci-dessus.

Dans sa version multiplexée, le même connecteur CN2 est tronqué dans sa région postérieure, pour comporter seulement la partie hachurée de la figure 2c, de manière à laisser les contacts CT2 dépasser. On observera ici que le connecteur peut être réalisé facilement dans ses deux versions grâce à l'utilisation d'une mise amovible dans le moule servant à réaliser le porte-lampes PL.

Un circuit imprimé CI portant les composants (non représentés) du circuit de démultiplexage et du circuit de puissance est placé en arrière du porte-lampes, parallèlement à celui-ci, au voisinage de l'arrière (à gauche sur la figure 2a) du connecteur CN2. Les contacts CT2 traversent des trous du circuit imprimé et sont soudés sur celui-ci.

Le circuit imprimé CI porte un autre ensemble de contacts CT3 qui font saillie vers l'arrière.

Un couvercle 203 vient coiffer l'ensemble constitué par le porte-lampes PL et le circuit imprimé CI, et comporte un aménagement 203a définissant une cavité arrière dans laquelle débouchent les contacts CT3 pour former un connecteur CN3 d'amenée des signaux de commande multiplexés, de la tension d'alimentation de puissance et de la masse.

Le couvercle 203 est par exemple clipsé sur les flancs du porte-lampes PL. Des aménagements 204 et 205 sont prévus respectivement vers l'arrière sur le porte-lampe et vers l'avant sur l'intérieur du couvercle 203 pour bloquer en place le circuit imprimé CI.

On observera également que le porte-lampes PL comporte, au droit du connecteur CN3, un aménagement d'appui 206 sur lequel le circuit imprimé CI vient s'appuyer pour résister aux sollicitations qui apparaissent en direction axiale lorsqu'un connecteur complémentaire du connecteur CN3 est mis en place dans celui-ci. On supprime ainsi tout risque de détérioration du circuit imprimé par excès de flexion.

La figure 2b montre à gauche l'aspect du module porte-lampes dans sa version à commande multiplexée et à droite l'aspect du même module porte-lampes dans sa version non multiplexée, c'est-à-dire sans le circuit imprimé et sans le capot 203.

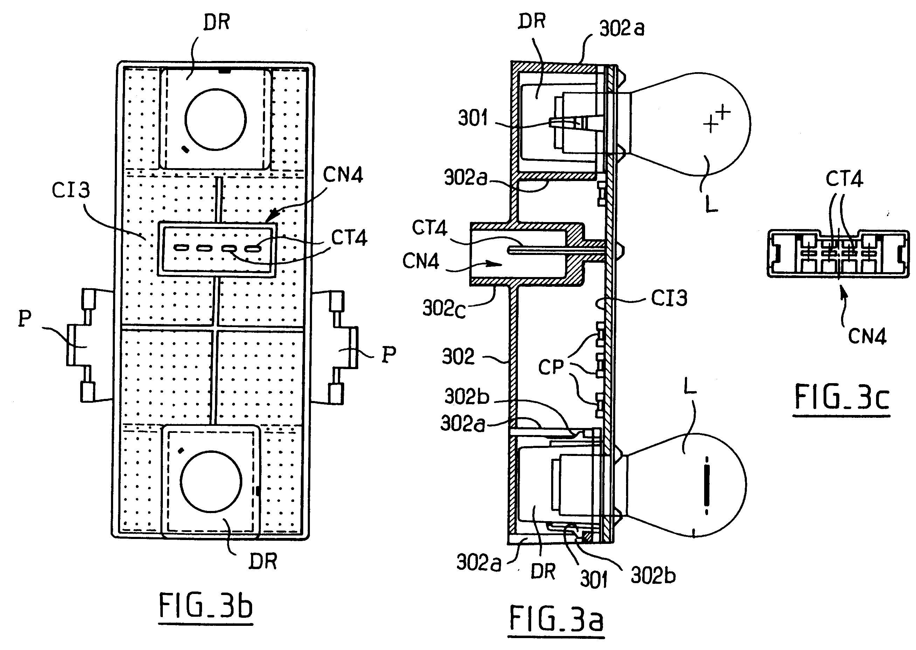

En référence maintenant aux figures 3a à 3c, on a représenté un module porte-lampes qui est essentiellement caractérisé en ce que le porte-lampes PL est constitué par un circuit imprimé CI3.

Ce circuit imprimé comporte des alvéoles 301 destinées au passage des culots CL des lampes L. Des douilles DR sont rapportées sur l'arrière du circuit CI3 et fixées sur celui-ci par soudage, de manière à assurer simultanément leur solidarisation mécanique et leur connexion électrique.

On observe que ces douilles comportent chacune des pattes de clipsage 301.

Le circuit imprimé CI3 porte du côté arrière (à gauche sur la figure 3a) des composants du circuit de démultiplexage et du circuit de puissance. Dans ce mode de réalisation, les composants sont de type à montage en surface. Dans le cas, on fait appel à un circuit imprimé double face, auquel cas la face côté composants porte les connexions électriques entre les divers composants, pour un soudage par refusion, tandis que la face opposée aux composants porte les pistes reliant le connecteur CN4 aux circuits et les pistes de puissance reliant le circuit de puissance aux douilles DR.

Les contacts mâles CT4 du connecteur CN4 sont soudés dans la région centrale du circuit imprimé CI3 et font saillie vers l'arrière.

Le module porte-lampes selon cette forme de réalisation comporte également un boîtier porteur et protecteur 302 servant de capot arrière qui comporte dans la région du pourtour de chaque douille DR des membrures 302a dirigées vers l'avant et portant des aménagements tels que des ouvertures 302b destinées à coopérer avec les pattes de clipsage 301 prévues sur les douilles. On assure de cette manière la fixation des douilles dans le capot 302, puis la mise en place et la soudure du circuit imprimé (des opérations de montage dans un autre ordre sont bien entendu possibles). Le capot 302 présente également des trous pour le passage des contacts CT4 et, dans cette région, un aménagement 302c définissant une cavité dans laquelle ces contacts font saillie, de manière à définir l'ensemble du connecteur CN4. On observe que ledit aménagement 302c prend appui du côté avant sur le circuit imprimé au voisinage des contacts CT4 pour rigidifier l'ensemble obtenu.

La figure 3b représente le module porte-lampes dépourvu du capot 302. On observe des nervures de renforcement (non référencées).

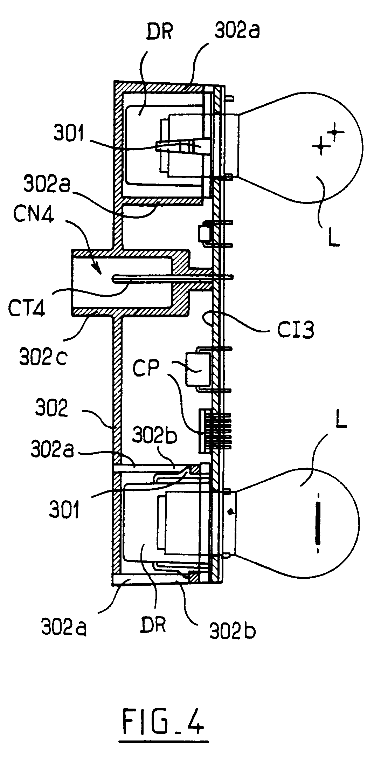

En référence maintenant à la figure 4, on a représenté un module porte-lampes qui se distingue de celui des figures 3a-3c essentiellement par le fait que les composants CP utilisés sont des composants traversants, le circuit imprimé étant adapté en conséquence. Les autres éléments sont identiques et désignés par les mêmes signes de référence. Dans ce cas, toutes les parties de connexion à souder des composants, des douilles et des contacts de connecteurs font saillie d'un même côté, c'est-à-dire sur la face du circuit imprimé CI3 opposée aux composants, si bien que toutes les connexions peuvent être réalisées par une opération unique de soudure à la vague.

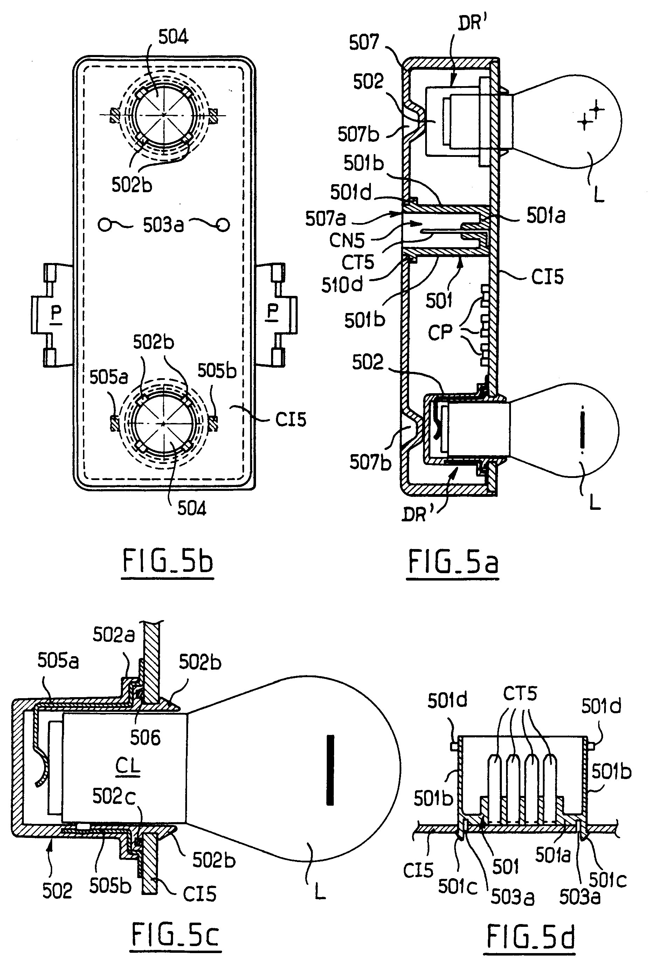

En référence maintenant aux figures 5a-5d, on a représenté un module porte-lampes dans lequel, comme dans le cas des troisième et quatrième formes de réalisation, un circuit imprimé CI5, ou encore un substrat métallique isolé (dit SMI), joue le même rôle que le circuit CI3. Les composants CP sont des composants à montage en surface (CMS) comme dans le cas des figures 3a-3c. Le substrat CI5 est dépourvu de trous notamment si l'on souhaite assurer une étanchéité de l'espace intérieur du module porte-lampes.

Dans cette réalisation, toutes les connexions électriques sont réalisées par une opération unique de refusion, classique en soi, du côté arrière du circuit imprimé, c'est-à-dire côté composants.

A cet effet, le connecteur CN5 pour l'amenée des signaux de commande multiplexés, de la tension d'alimentation des lampes et de la masse comporte une embase de conception spécifique, de même que les douilles rapportées DR' présentent une configuration adaptée pour cette refusion.

Plus précisément, comme le montrent les figures 5a et 5d, le connecteur CN5 comporte une embase spécifique 501 en matériau isolant. Cette embase 501 comporte un fond 501a dans lequel sont emprisonnés les contacts associés CT5 et des parois latérales 501b définissant une cavité pour la réception d'un connecteur complémentaire, cavité dans laquelle les contacts CT5 font saillie. Du côté opposé à la cavité, le fond comporte des rainures dans lesquelles les extrémités des contacts CT5, coudées à 90°, sont reçues. De cette manière, l'embase 501 pourvue des contacts CT5 présente une face de base, destinée à être appliquée contre le circuit imprimé CI5, essentiellement plane et convenable pour une opération de refusion.

Par ailleurs, de part et d'autre de la paroi de fond 501a sont prévues des languettes de clipsage 501c aptes à s'engager dans des trous traversants 503a du circuit imprimé CI5 pour le maintien du connecteur jusqu'à l'opération de refusion.

Du côté opposé au fond 501a, les parois latérales 501b présentent un épaulement périphérique 501d à des fins expliquées plus loin.

Comme le montre en particulier la figure 5c, chaque douille rapportée DR' comporte un corps en matière isolante 502, ouvert du côté du circuit imprimé et fermé de l'autre côté, destiné à recevoir le culot CL de la lampe L.

Ce corps 502 comporte à sa base une surépaisseur 502a à partir de laquelle font saillie des languettes de clipsage 502b destinées à coopérer avec des encoches formées dans le circuit imprimé au bord des trous 504 pour les lampes. Les languettes 502b et les ouvertures correspondantes sont de préférence conçues et positionnées pour assurer un détrompage lors du positionnement des douilles avant refusion, afin que les filaments des lampes que ces douilles vont recevoir soient bien orientés.

Des éléments conducteurs 505a, 505b sont noyés dans le corps 502 (réalisé par exemple par surmoulage), débouchent à une extrémité dans l'espace intérieur du corps pour établir, de façon connue en soi, un connexion électrique avec le culot métallique ou le plot terminal de la lampe, et débouchent à l'autre extrémité dans une région de la surépaisseur 502a. Ces autres extrémités font saillie radialement à l'extérieur de la surépaisseur, comme illustré, en affleurement avec la surface généralement plane par laquelle le corps 502 s'appuie contre le circuit imprimé CI5 autour de l'ouverture 504 lorsque le clipsage précité est réalisé.

De cette manière, on réalise une douille rapportée DR' convenant également pour l'opération de refusion.

On observe également que le corps 502 de la douille comporte dans sa surface de base une gorge annulaire 502c dans laquelle est disposé un joint torique 506 capable d'assurer une étanchéité entre l'extérieur et l'intérieur du corps 502, c'est-à-dire entre l'intérieur du sous-ensemble, recevant les composants électroniques, et l'extérieur du module porte-lampes.

Le module porte-lampes selon ce mode de réalisation comporte enfin un couvercle 507 qui vient coiffer le circuit imprimé CI5 et les composants CP par l'arrière. De préférence, le couvercle 507 est collé périphériquement sur les bords du circuit imprimé CI5.

Le couvercle 507 comporte une ouverture 507a au niveau du connecteur CN5. L'épaulement périphérique 501d définit une zone d'appui pour le couvercle 507 autour de cette ouverture. On peut à cet endroit soit réaliser un collage, soit interposer un joint pour assurer l'étanchéité.

Par ailleurs, le couvercle 507 comporte au droit des douilles rapportées DR' des renfoncements 507b qui définissent pour ces douilles un appui arrière destiné à éviter tout risque de détérioration de la liaison mécanique et électrique entre douille et circuit imprimé notamment lors de la mise en place d'une lampe.

On observera par ailleurs que, dans toutes les réalisations décrites, le module porte-lampes peut être monté sur un socle (non représenté) du bloc de feux par encliquetage entre deux pattes élastiques P disposées en vis-à-vis.

On notera pour terminer que certaines des formes de réalisation décrites et représentées permettent avantageusement d'utiliser des pièces identiques pour des blocs de feux gauche et droit d'un même véhicule,

On notera également que ces formes de réalisation autorisent l'établissement de l'ensemble des connexions électriques, par refusion dans le cas des composants montés en surface et/ou par soudure à la vague, le plus souvent en une opération unique. Les coûts de fabrication peuvent donc être diminués et la fiabilité accrue.

Bien entendu, la présente invention n'est nullement limitée à la forme de réalisation décrite ci-dessus et représentée sur les dessins, mais l'homme de l'art saura y apporter toute variante ou modification dans le cadre des revendications a-après.

## Revendications

1. Module électrique pour un bloc de feux de signalisation de véhicule automobile, comprenant:
un circuit électronique de traitement d'un signal de commande et de commutation pour sélectivement allumer et éteindre des lampes reçues dans des douilles en fonction des ordres contenus dans le signal de commande,
un circuit imprimé (CI; CI3; CI5) portant ledit circuit électronique,
des moyens (102; CI3; CI5) de liaison électrique de puissance entre le circuit électronique et les douilles,
caractérisé en ce qu'il comprend en outre :
un porte-lampes (PL) matérialisant une pluralité d'alvéoles formant les douilles pour les lampes, et
des moyens (101a, CT; 203-205, CN2; CI3, DR; CI5; DR') pour associer le porte-lampes au circuit imprimé et établir une connexion électrique entre ledit circuit imprimé et les moyens de liaison électrique de puissance.

2. Module selon la revendication 1, caractérisé en ce que le porte-lampes (PL) présente la forme d'une plaque (101) comportant d'un côté des pistes conductrices (102) constituant les moyens de liaison électrique de puissance et du côté opposé un boîtier (101a) dans lequel sont prévus des moyens de montage du circuit imprimé (CI) portant ledit circuit électronique, en ce que ledit circuit imprimé porte des contacts (CT) s'étendant parallèlement à une direction de mise en place et d'extraction dudit circuit imprimé et aptes à traverser ledit porte-lampes pour être reliés électriquement auxdites pistes.

3. Module selon la revendication 2, caractérisé en ce que ladite direction de mise en place et d'extraction du circuit imprimé est essentiellement perpendiculaire à un plan général dudit porte-lampes (PL).

4. Module selon l'une des revendications 2 et 3, caractérisé en ce qu'il comprend en outre un couvercle (101b) de fermeture dudit boîtier (101a), dans lequel est formée une ouverture pour l'accès à un connecteur de commande et d'alimentation électrique (CN) monté sur ledit circuit imprimé (CI).

5. Module selon la revendication 1, caractérisé en ce que le porte-lampes (PL) présente la forme d'une plaque comportant d'un côté des pistes conductrices (102) constituant les moyens de liaison électrique de puissance et du côté opposé des moyens (204) formant butées pour le circuit imprimé (CI), en ce que le circuit imprimé s'étend essentiellement parallèlement à un plan général dudit porte-lampes, en ce qu'il est prévu un moyen de connexion électrique (CN2) entre lesdites pistes conductrices (102) et ledit circuit électronique, qui s'étend essentiellement transversalement au circuit imprimé et au porte-lampes et qui traverse ce dernier pour sa connexion électrique avec lesdites pistes, et en ce qu'il est prévu en outre un boîtier (203) monté sur le porte-lampes et définissant des contre-butées (205) pour le circuit imprimé.

6. Module selon la revendication 5, caractérisé en ce que ledit moyen de connexion (CN2) est adaptable pour constituer un connecteur pour le branchement d'un faisceau conventionnel de conducteurs individuels d'alimentation desdites lampes en l'absence du circuit électronique.

7. Module selon la revendication 5 ou 6, caractérisé en ce qu'il est prévu en outre un connecteur de commande et d'alimentation (CN3) comportant des contacts (CT3) montés sur le circuit imprimé (CI) et traversant le boîtier (203), ce dernier comportant des aménagements (203a) définissant une cavité pour lesdits contacts.

8. Module selon la revendication 7, caractérisé en ce que le porte-lampes (PL) possède au droit dudit connecteur de commande et d'alimentation (CN3) des moyens (206) formant appui pour le circuit imprimé (CI).

9. Module selon la revendication 1, caractérisé en ce que le circuit imprimé (CI3; CI5) constitue également une plaque porte-lampes, en ce que les moyens de liaison électrique de puissance sont portés par ledit circuit imprimé et en ce qu'il est prévu en outre des douilles rapportées (DR; DR') du côté des composants (CP) dudit circuit électronique et soudées sur le circuit imprimé.

10. Module selon la revendication 9, caractérisé en ce qu'il est prévu en outre un boîtier (302) comportant des aménagements (302a, 302b) pour son montage sur le module par coopération avec des aménagements associés (301) formés sur les douilles rapportées (DR).

11. Module selon la revendication 10, caractérisé en ce que lesdits aménagements (302a, 302b, 301) sont des aménagements d'encliquetage.

12. Module selon l'une des revendications 10 et 11, caractérisé en ce qu'il est prévu en outre un connecteur de commande et d'alimentation (CN4) comportant des contacts (CT4) montés dans l'épaisseur du boîtier (302) et reliés au circuit imprimé (CI3), ledit boîtier comportant des aménagements (302c) définissant une cavité pour lesdits contacts.

13. Module selon la revendication 12, caractérisé en ce que lesdits aménagements (302c) viennent en appui contre le circuit imprimé (CI3) au voisinage des contacts (CT4).

14. Module selon la revendication 12 ou 13, caractérisé en ce que le circuit imprimé (CI3) est un circuit double face, en ce que les composants (CP) du circuit électronique sont des composants à montage en surface et en ce que les douilles (DR) et les contacts (CT4) du connecteur (CN4) sont soudés sur le circuit imprimé du côté opposé aux composants.

15. Module selon la revendication 12 ou 13, caractérisé en ce que le circuit imprimé (CI3) est un circuit simple face, en ce que les composants (CP) du circuit électronique sont des composants à montage traversant et en ce que les parties à souder des composants, des douilles (DR) et des contacts (CT4) du connecteur (CN4) font toutes saillie d'un même côté du circuit imprimé, opposé aux composants, pour permettre une opération unique de soudure à la vague.

16. Module selon la revendication 9, caractérisé en ce que chaque douille comporte un corps (502) en matière isolante et au moins deux organes conducteurs (505a, 505b) portés par le corps, débouchant à une extrémité dans une cavité définie par ledit corps pour recevoir un culot (CL) de lampe (L) et à l'autre extrémité au voisinage d'une surface d'appui du corps contre le circuit imprimé (CI5) et dans l'alignement de ladite surface, pour permettre de réaliser la connexion électrique de la douille par refusion en même temps que les composants du circuit électronique.

17. Module selon la revendication 16, caractérisé en ce que ladite surface d'appui du corps de douille comporte une gorge (502c) pour un joint d'étanchéité (506).

18. Module selon la revendication 16 ou 17, caractérisé en ce que lesdites autres extrémités des organes conducteurs (505a, 505b) font saillie vers l'extérieur par rapport à une région de base (502a) du corps (502) définissant ladite surface d'appui.

19. Module selon l'une des revendications 16 à 18, caractérisé en ce que chaque corps (502) de douille comporte des aménagements (502) aptes à coopérer avec des aménagements associés (504) prévus sur le circuit imprimé (CI5) pour le maintien dudit corps de douille avant soudage par refusion.

20. Module selon l'une des revendications 16 à 19, caractérisé en ce qu'il est prévu en outre un boîtier (507) collé sur la périphérie circuit imprimé (CI5).

21. Module selon la revendication 19, caractérisé en ce qu'il est prévu en outre un connecteur de commande et d'alimentation (CN5) comportant une embase (501) emprisonnant une pluralité de contacts (CT5) du connecteur, ladite embase présentant une surface d'appui contre le circuit imprimé et lesdits contacts étant disposés en affleurement sur cette surface d'appui, pour permettre de réaliser la connexion électrique de ladite embase par refusion en même temps que les composants (CP) du circuit électronique, et ladite embase (501) définissant une cavité pour les contacts du connecteur.

22. Module selon la revendication 21, caractérisé en ce que l'embase (501) du connecteur (CN5) comporte des aménagements (501c) aptes à coopérer avec des aménagements associés (503a) prévus sur le circuit imprimé (CI5) pour le maintien de ladite embase avant soudage par refusion.

23. Module selon la revendication 21 ou 22, caractérisé en ce que ledit boîtier (507) comporte une ouverture (507a) au droit de ladite cavité définie par l'embase (501).

24. Module selon la revendication 23, caractérisé en ce que boîtier (507) est soudé à ladite embase (501) au voisinage de ladite ouverture (507a).

25. Module selon l'une des revendications 19 à 24, caractérisé en ce que le boîtier (507) présente au droit de chaque douille rapportée (DR') un aménagement (507b) d'appui contre une face de ladite douille opposée au circuit imprimé (CI5).

## Claims

1. An electrical module for a block of signalling lights for a motor vehicle, the module comprising:
an electronic circuit for processing a control and switching signal to selectively switch on and switch off lamps received in sockets as a function of instructions contained in the control signal;
a printed circuit (CI; CI3; CI5) carrying said electronic circuit;
electrical power link means (102; CI3; CI5) between the electronic circuit and the sockets;
the module being characterized in that it further comprises:
a lamp-carrier (PL) implementing a plurality of recesses forming sockets for the lamps; and
means (101a, CT; 203-205, CN2; CI3, DR; CI5; DR') for associating the lamp-carrier with the printed circuit and for establishing an electrical connection between said printed circuit and the electrical power link means.

2. A module according to claim 1, characterized in that the lamp-carrier (PL) is in the form of a plate (101) including conductive tracks (102) on one side constituting the electrical power link means, and a housing (101a) on the opposite side in which mounting means are provided for the printed circuit (CI) carrying said electronic circuit, and in that said printed circuit carries contacts (CT) that extend parallel to an insertion and extraction direction for said printed circuit and suitable for passing through said lamp-carrier to be electrically connected to said tracks.

3. A module according to claim 2, characterized in that said insertion and extraction direction for the printed circuit is essentially perpendicular to a general plane of said lamp-carrier (PL).

4. A module according to claim 2 or 3, characterized in that it further comprises a cover (101b) for closing said housing (101a), an opening being formed in the cover to give access to a connector (CN) for electrical control and power supply purposes mounted on said printed circuit (CI).

5. A module according to claim 1, characterized in that the lamp-carrier (PL) is in the form of a plate including on one side conductive tracks (102) constituting the electrical power link means and on the opposite side means (204) forming abutments for the printed circuit (CI), in that the printed circuit extends essentially parallel to a general plane of said lamp-carrier, in that electrical connection means (CN2) are provided between said conductive tracks (102) and said electronic circuit, which means extend essentially transversely to the printed circuit and to lamp-carrier, passing through the lamp-carrier for electrical connection with said tracks, and in that a housing (203) is also provided mounted on the lamp-carrier and defining counter-abutments (205) for the printed circuit.

6. A module according to claim 5, characterized in that said connection means (CN2) is adaptable to constitute a connector for connecting a conventional bundle of individual power supply conductors for said lamps in the absence of the electronic circuit.

7. A module according to claim 5 or 6, characterized in that a control and power supply connector (CN3) is also provided including contacts (CT3) mounted on the printed circuit (CI) and passing through the housing (203), the housing including fittings (203a) that define a cavity for receiving said contacts.

8. A module according to claim 7, characterized in that the lamp-carrier (PL) possesses means (206) forming a bearing surface for said printed circuit (CI) in register with said control and power supply connector (CN3).

9. A module according to claim 1, characterized in that the printed circuit (CI3; CI5) also constitutes a lamp support plate, in that the electrical power link means are carried by said printed circuit, and in that add-on sockets (DR; DR') are also provided on the same side as the components (CP) of said electronic circuit and are soldered to the printed circuit.

10. A module according to claim 9, characterized in that a housing (302) is also provided that includes fittings (302a, 302b) enabling it to be mounted on the module by co-operating with associated fittings (301) formed on the add-on sockets (DR).

11. A module according to claim 10, characterized in that said fittings (302a, 302b, 301) are snap-fastening fittings.

12. A module according to claim 10 or 11, characterized in that a control and power supply connector (CN4) is also provided including contacts (CT4) mounted in the thickness of the housing (302) and connected to the printed circuit (CI3), said housing including fittings (302c) that define a cavity for receiving said contacts.

13. A module according to claim 12, characterized in that said fittings (302c) bear against the printed circuit (CI3) in the vicinity of the contacts (CT4).

14. A module according to claim 12 or 13, characterized in that the printed circuit (CI3) is a double-sided printed circuit, in that the components (CP) of the electronic circuit are surface-mount components, and in that the sockets (DR) and the contacts (CT4) of the connector (CN4) are soldered to the printed circuit on its side opposite from the components.

15. A module according to claim 12 or 13, characterized in that the printed circuit (CI3) is a single-sided printed circuit, in that the components (CP) of the electronic circuit are through mount components, and in that the portions of the components, of the sockets (DR), and of the contacts (CT4) of the connector (CN4) that are to be soldered all project from the same side of the printed circuit, which side is opposite from the components, thereby making it possible to use a single wave soldering operation.

16. A module according to claim 9, characterized in that each socket includes a body (502) of insulating material and at least two conductor members (505a, 505b) carried by the body, each conductor member projecting at one end into a cavity defined by said body for receiving the base (CL) of a lamp (L), and at its opposite end into the vicinity of a surface of the body that bears against the printed circuit (CI5) and that is in alignment with said surface, thereby enabling electrical connections to be made with the socket by reflow soldering while simultaneously making connections with the components of the electronic circuit by reflow soldering.

17. A module according to claim 16, characterized in that said bearing surface of the socket body includes a groove (502c) for receiving a sealing ring (506).

18. A module according to claim 16 or 17, characterized in that said other ends of the conductor members (505a, 505b) project outwards relative to a base region (502a) of the body (502) that defines said bearing surface.

19. A module according to any one of claims 16 to 18, characterized in that each socket body (502) includes fittings (502) suitable for co-operating with associated fittings (504) provided on the printed circuit (CI5) for holding said socket body prior to reflow soldering.

20. A module according to any one of claims 16 to 19, characterized in that a housing (507) is also provided that is glued to the periphery of the printed circuit (CI5).

21. A module according to claim 19, characterized in that a control and power supply connector (CN5) is also provided including a base (501) holding captive a plurality of contacts (CT5) of the connector, said base having a bearing surface pressing against the printed circuit and said contacts being disposed flush with said bearing surface to enable an electrical connection to be made with said base by reflow soldering simultaneously with the electrical connections with the components (CP) of the electronic circuit themselves being made by reflow soldering, said base (501) defining a cavity in which the contacts of the connector are received.

22. A module according to claim 21, characterized in that the base (501) of the connector (CN5) includes fittings (501c) suitable for co-operating with associated fittings (503a) provided on the printed circuit (CI5) for holding said base prior to reflow soldering.

23. A module according to claim 21 or 22, characterized in that said housing (507) includes an opening (507a) in register with said cavity defined by the base (501).

24. A module according to claim 23, characterized in that the housing (507) is soldered to said base (501) in the vicinity of said opening (507a).

25. A module according to any one of claims 19 to 24, characterized in that the housing (507) has, in register with each add-on socket (DR'), a fitting (507b) bearing against a face of said socket that is opposite from the printed circuit (CI5).

## Patentansprüche

1. Elektrische Baugruppe für eine Signalleuchteneinheit eines Kraftfahrzeugs, enthaltend:
eine elektronische Schaltung zur Verarbeitung eines Steuer- und Schaltsignals, um nach Maßgabe der im Steuersignal enthaltenen Sefehle wahlweise in Fassungen eingesetzte Lampen ein- und auszuschalten,
eine gedruckte Schaltung (CI; CI3; CI5), auf der die besagte elektronische Schaltung angebracht ist,
Mittel (102; CI3; CI5) für die elektrische Leistungsverbindung zwischen der gedruckten Schaltung und den Fassungen,
**dadurch gekennzeichnet,** daß sie außerdem einen Lampenhalter (PL) mit einer Mehrzahl von Steckbuchsen, welche die Fassungen für die Lampen bilden, und Mittel (101a, CT; 203-205, CN2; CI3, DR; CI5; DR') enthält, um den Lampenhalter mit der gedruckten Schaltung zu verbinden und einen elektrischen Anschluß zwischen der besagten gedruckten Schaltung und den Mitteln für die elektrische Leistungsverbindung herzustellen.

2. Baugruppe nach Anspruch 1, **dadurch gekennzeichnet,** daß der Lampenhalter (PL) die Form einer Platte (101) aufweist, die auf einer Seite Leiterbahnen (102), welche die elektrischen Leistungsverbindungsmittel bilden, und auf der gegenüberliegenden Seite ein Gehäuse (101a) umfaßt, in dem Mittel für die Anbringung der gedruckten Schaltung (CI) vorgesehen sind, die die besagte elektronische Schaltung trägt, daß die besagte gedruckte Schaltung Kontakte (CT) trägt, die sich parallel zu einer Ein- und Ausbaurichtung der besagten gedruckten Schaltung erstrecken und die durch den besagten Lampenhalter hindurchgehen können, um elektrisch mit den besagten Leiterbahnen verbunden zu werden.

3. Baugruppe nach Anspruch 2 , **dadurch gekennzeichnet,** daß die besagte Ein- und Ausbaurichtung der gedruckten Schaltung in etwa senkrecht zu einer Gesamtebene des besagten Lampenhalters (PL) verläuft.

4. Baugruppe nach einem der Ansprüche 2 und 3 , **dadurch gekennzeichnet,** daß sie außerdem einen Verschlußdeckel (101b) für das besagte Gehäuse (101a) umfaßt, in dem eine Öffnung für den Zugang zu einem Steuerungs- und Stromversorgungsverbinder (CN) ausgebildet ist, der auf der besagten gedruckten Schaltung (CI) angebracht ist.

5. Baugruppe nach Anspruch 1 , **dadurch gekennzeichnet,** daß der Lampenhalter (PL) die Form einer Platte aufweist, die auf einer Seite Leiterbahnen (102), welche die elektrischen Leistungsverbindungsmittel bilden, und auf der gegenüberliegenden Seite Mittel (204) umfaßt, die Anschläge für die gedruckte Schaltung (CI) bilden, daß sich die gedruckte Schaltung in etwa parallel zu einer Gesamtebene des besagten Lampenhalters erstreckt, daß ein Mittel (CN2) für den elektrischen Anschluß zwischen den besagten Leiterbahnen (102) und der besagten elektronischen Schaltung vorgesehen ist, das sich in etwa quer zur gedruckten Schaltung und zum Lampenhalter erstreckt und das durch diesen hindurchgeht, um seinen elektrischen Anschluß an die besagten Leiterbahnen herzustellen, und daß außerdem ein Gehäuse (203) vorgesehen ist, das auf dem Lampenhalter angebracht ist und Gegenanschläge (205) für die gedruckte Schaltung bildet.

6. Baugruppe nach Anspruch 5 , **dadurch gekennzeichnet,** daß das besagte Anschlußmittel (CN2) zur Bildung eines Verbinders für den Anschluß eines herkömmlichen Bündels einzelner Leitungen zur Stromversorgung der besagten Lampen ohne elektronische Schaltung geeignet ist.

7. Baugruppe nach Anspruch 5 oder 6 , **dadurch gekennzeichnet,** daß außerdem ein Steuerungs- und Stromversorgungsverbinder (CN3) vorgesehen ist, der Kontakte (CT3) umfaßt, die auf der gedruckten Schaltung (CI) angebracht sind und durch das Gehäuse (203) hindurchgehen, wobei letzteres Anordnungen (203a) umfaßt, die eine Aufnahme für die besagten Kontakte bilden.

8. Baugruppe nach Anspruch 7 , **dadurch gekennzeichnet,** daß der Lampenhalter (PL) in Höhe des besagten Steuerungs- und Stromversorgungsverbinders (CN3) Mittel (206) besitzt, die eine Auflage für die gedruckte Schaltung (CI) bilden.

9. Baugruppe nach Anspruch 1 , **dadurch gekennzeichnet,** daß die gedruckte Schaltung (CI3; CI5) außerdem eine Lampenhalterplatte bildet, daß die elektrischen Leistungsverbindungsmittel auf der besagten gedruckten Schaltung angebracht sind und daß außerdem Fassungen (DR; DR') vorgesehen sind, die auf der Seite der Bauelemente (CP) der besagten elektronischen Schaltung angesetzt und auf der gedruckten Schaltung aufgelötet sind.

10. Baugruppe nach Anspruch 9 , **dadurch gekennzeichnet,** daß außerdem ein Gehäuse (302) vorgesehen ist, das Anordnungen (302a, 302b) für seine Anbringung an der Baugruppe durch Zusammenwirken mit zugehörigen Anordnungen (301) umfaßt, die an den angesetzten Fassungen (DR) ausgebildet sind.

11. Baugruppe nach Anspruch 10 , **dadurch gekennzeichnet,** daß die besagten Anordnungen (302a, 302b, 301) Einrastanordnungen sind.

12. Baugruppe nach einem der Ansprüche 10 und 11, **dadurch gekennzeichnet,** daß außerdem ein Steuerungs- und Stromversorgungsverbinder (CN4) vorgesehen ist, der Kontakte (CT4) umfaßt, die in das Gehäuse (302) eingelassen und mit der gedruckten Schaltung (CI3) verbunden sind, wobei das besagte Gehäuse Anordnungen (302c) umfaßt, die eine Aufnahme für die besagten Kontakte bilden.

13. Baugruppe nach Anspruch 12 , **dadurch gekennzeichnet,** daß die besagten Anordnungen (302c) an der gedruckten Schaltung (CI3) in der Nähe der Kontakte (CT4) zur Auflage kommen.

14. Baugruppe nach Anspruch 12 oder 13 , **dadurch gekennzeichnet,** daß die gedruckte Schaltung (CI3) eine doppelseitige Schaltung ist, daß die Bauelemente (CP) der elektronischen Schaltung oberflächenmontierte Bauelemente sind und daß die Fassungen (DR) und die Kontakte (CT4) des Verbinders (CN4) an der gedruckten Schaltung auf der den Bauelementen gegenüberliegenden Seite aufgelötet sind.

15. Baugruppe nach Anspruch 12 oder 13 , **dadurch gekennzeichnet,** daß die gedruckte Schaltung (CI3) eine einseitige Schaltung ist, daß die Bauelemente (CP) der elektronischen Schaltung durchgehend montierte Bauelemente sind und daß die zu verlötenden Teile der Bauelemente, der Fassungen (DR) und der Kontakte (CT4) des Verbinders (CN4) alle auf der gleichen, den Bauelementen gegenüberliegenden Seite der gedruckten Schaltung vorstehen, um einen einzigen Schwall-Lötvorgang zu ermöglichen.

16. Baugruppe nach Anspruch 9 , **dadurch gekennzeichnet,** daß jede Fassung einen Körper (502) aus Isolierstoff und mindestens zwei an dem Körper angebrachte leitende Organe (505a, 505b) enthält, die an einem Ende in eine Aufnahme, die durch den besagten Körper gebildet wird, um einen Sockel (CL) der Lampe (L) aufzunehmen, und am anderen Ende in der Nähe einer Auflagefläche des Körpers an der gedruckten Schaltung (CI5) und in Ausrichtung auf die besagte Fläche münden, damit der elektrische Anschluß der Fassung durch Aufschmelzen gleichzeitig mit den Bauelementen der elektronischen Schaltung ausgeführt werden kann.

17. Baugruppe nach Anspruch 16 , **dadurch gekennzeichnet,** daß die besagte Auflagefläche des Fassungskörpers eine Auskehlung (502c) für eine Dichtung (506) enthält.

18. Baugruppe nach Anspruch 16 oder 17 , **dadurch gekennzeichnet,** daß die besagten anderen Enden der leitenden Organe (505a, 505b) im Verhältnis zu einem Fußbereich (502a) des Körpers (502), der die besagte Auflagefläche bildet, nach außen vorstehen.

19. Baugruppe nach einem der Ansprüche 16 bis 18, **dadurch gekennzeichnet,** daß jeder Fassungskörper (502) Anordnungen (502) umfaßt, die mit zugehörigen Anordnungen (504) zusammenwirken können, die auf der gedruckten Schaltung (CI5) vorgesehen sind, um die Halterung des besagten Körpers vor dem Löten durch Aufschmelzen zu bewirken.

20. Baugruppe nach einem der Ansprüche 16 bis 19, **dadurch gekennzeichnet,** daß außerdem ein Gehäuse (507) vorgesehen ist, das am Umfang der gedruckten Schaltung (CI5) verklebt ist.

21. Baugruppe nach Anspruch 19 , **dadurch gekennzeichnet,** daß außerdem ein Steuerungs- und Stromversorgungsverbinder (CN5) vorgesehen ist, der eine Fußplatte (501) umfaßt, die eine Mehrzahl von Kontakten (CT5) des Verbinders umschließt, wobei die besagte Fußplatte eine Auflagefläche an der gedruckten Schaltung aufweist und wobei die besagten Kontakte bündig an dieser Auflagefläche angeordnet sind, damit der elektrische Anschluß der besagten Fußplatte durch Aufschmelzen gleichzeitig mit den Bauelementen (CP) der elektronischen Schaltung ausgeführt werden kann, und wobei die besagte Fußplatte (501) eine Aufnahme für die Kontakte des Verbinders bildet.

22. Baugruppe nach Anspruch 21 , **dadurch gekennzeichnet,** daß die Fußplatte (501) des Verbinders (CN5) Anordnungen (501c) umfaßt, die mit zugehörigen Anordnungen (503a) zusammenwirken können, die auf der gedruckten Schaltung (CI5) vorgesehen sind, um die Halterung der besagten Fußplatte vor dem Löten durch Aufschmelzen zu bewirken.

23. Baugruppe nach Anspruch 21 oder 22 , **dadurch gekennzeichnet,** daß das besagte Gehäuse (507) eine Öffnung (507a) in Höhe der besagten Aufnahme enthält, die durch die Fußplatte (501) gebildet wird.

24. Baugruppe nach Anspruch 23 , **dadurch gekennzeichnet,** daß das Gehäuse (507) an der besagten Fußplatte (501) in der Nähe der besagten Öffnung (507a) aufgelötet ist.

25. Baugruppe nach einem der Ansprüche 19 bis 24, **dadurch gekennzeichnet,** daß das Gehäuse (507) in Höhe jeder angesetzten Fassung (DR') eine Anordnung (507b) für die Auflage an einer der gedruckten Schaltung (CI5) gegenüberliegenden Fläche der besagten Fassung aufweist.
